# EUROPÄISCHE PATENTANMELDUNG

(11) **EP 2 600 019 A2**
(43) Veröffentlichungstag der Anmeldung: **05.06.2013**
(21) Anmeldenummer: 12194340.1
(22) Anmeldetag: 27.11.2012
(51) Int. Cl.: F16D 13/72, F16D 21/06

(54) **Kühlsystem für eine trockene Doppelkupplung eines Doppelkupplungsgetriebes**

(30) Priorität: 30.11.2011 DE 102011087458
(71) Anmelder: Ford Global Technologies, LLC, Dearborn, MI 48126 (US)
(72) Erfinder: Kirchhoffer, Johann, 50737 Köln (DE)
(74) Vertreter: Dörfler, Thomas

(57) **Zusammenfassung**

Die Erfindung betrifft ein Doppelkupplungsgetriebe für Kraftfahrzeuge mit zwei Teilgetrieben, einer trockenen Doppelkupplung (1) oder wahlweise einer Doppelkupplung (28), die das Drehmoment vom Motor wahlweise auf eines der beiden Teilgetriebe überträgt, sowie einem Kühlsystem mit einem Lüfterrad zur Kühlung der Doppelkupplung. Für ein solches Doppelkupplungsgetriebe soll ein Kühlsystem entwickelt werden, welches sämtliche Funktionsteile der Doppelkupplung ausreichend kühlt. Dies wird gemäß der Erfindung dadurch gelöst, dass das Lüfterrad (15) mit der vom Motor kommenden Eingangswelle (8) der Doppelkupplung rotiert und dass der durch das Lüfterrad erzeugte Kühlluftstrom (16) durch das gesamte Gehäuse (12) der Doppelkupplung hindurchführbar ist.

## Beschreibung

Die Erfindung betrifft ein Doppelkupplungsgetriebe für Kraftfahrzeuge mit zwei Teilgetrieben, einer trockenen Doppelkupplung, die das Drehmoment vom Motor wahlweise auf eines der beiden Teilgetriebe überträgt, sowie einem Kühlsystem mit einem Lüfterrad zur Kühlung der Doppelkupplung.

Doppelkupplungsgetriebe sind automatische Schaltgetriebe, die mittels zweier Teilgetriebe einen vollautomatischen Gangwechsel ohne Kraftunterbrechung ermöglichen. Die Getriebesteuerung wählt die Gänge selbsttätig oder nach Fahrerwunsch im Rahmen der zugelassenen Drehzahlbereiche. Die Übertragung des Drehmoments erfolgt über eine der beiden Kupplungen, die die beiden Teilgetriebe mit dem Motor verbinden. Während eine Kupplung schließt, öffnet die andere.

Derartige trockene Doppelkupplungen leiden häufig an mangelnder Kühlung beziehungsweise an Überhitzung. Dies ist insbesondere bei kleinen Motoren problematisch, bei denen häufig geschaltet werden muss und die Kupplungsscheiben einer hohen Schleifbelastung unterworfen sind, und zwar insbesondere beim Anfahren oder beim Stop-and-go-Betrieb. Parallel zur Überhitzung können bei der Nutzung von spezifischen Reibbelägen störende Kupplungsgerüche auftreten, die dann im Fahrgastraum präsent sind.

Um derartige Probleme zu lösen, sollte die Kupplung aktiv gekühlt werden.

Aus der DE 10 2010 007 198 A1 ist bereits ein Doppelkupplungsgetriebe mit einer aktiven Lüftkühlung bekannt. Zur Erzeugung des Kühlluftstroms dient dabei ein Lüfterrad, welches auf einer der Ausgangswellen der Doppelkupplung beziehungsweise auf einer der Getriebeeingangswellen sitzt. Bei dieser bekannten Version wird nur die Anfahrkupplung gekühlt. Mit einem solchen Kühlsystem kann die erforderliche Kühlleistung bei hohen Schlupfdrehzahlen nicht erbracht werden.

Der Erfindung liegt daher die Aufgabe zugrunde, ein Kühlsystem für eine trockene Doppelkupplung zu entwickeln, welches sämtliche Funktionsteile der Doppelkupplung ausreichend kühlt.

Erfindungsgemäß wird diese Aufgabe dadurch gelöst, dass das Lüfterrad mit der vom Motor kommenden Eingangswelle der Kupplung rotiert und dass der durch das Lüfterrad erzeugte Kühlluftstrom durch das gesamte Gehäuse der Doppelkupplung hindurchführbar ist.

Aufgrund dieser erfindungsgemäßen Merkmale ist eine permanente intensive Kühlung möglich, wobei aufgrund der Tatsache, dass das Lüfterrad mit der Eingangwelle der Kupplung, also vorzugsweise mit der Kurbelwelle, rotiert, ist automatisch eine motordrehzahlabhängige Kühlung möglich.

Vorzugsweise rotiert das Lüfterrad mit derselben Drehzahl wie die vom Motor kommende Welle, die mit den Eingangswellen der Doppelkupplung in Abhängigkeit des eingelegten Ganges synchronisiert ist. Diese Merkmalskombination ist mit besonders einfachen technischen Mitteln zu erreichen, denn das Lüfterrad braucht lediglich auf der Motorausgangswelle angebracht beziehungsweise unmittelbar mit dieser gekoppelt zu sein.

Eine solche Konstruktion ist beispielsweise dadurch erreichbar, dass das Lüfterrad mit der auf der Motorausgangswelle sitzenden Antriebsscheibe der Doppelkupplung rotiert.

Dabei kann das Lüfterrad als gesondertes Bauteil an der Antriebsscheibe, auf der Motorausgangswelle sitzend, der Doppelkupplung angebracht sein.

Alternativ kann das Lüfterrad aber auch unmittelbar in die Antriebsscheibe integriert sein.

Auch kann das Lüfterrad in der Zentralscheibe der Kupplung untergebracht werden.

In jedem Fall ist es aber dabei wichtig, dass die Antriebsscheibe, die Zentralscheibe und das Kupplungssystem Durchlassöffnungen für die Kühlluft aufweisen, und zwar je nachdem, wo das Lüfterrad sitzt.

Das Lüfterrad saugt die Kühlluft von außerhalb des Kupplungsgehäuses an. Insofern sollte der Einlassbereich der Kühlluft in das Kupplungsgehäuse zweckmäßig in Strömungsrichtung vor dem Lüfterrad liegen.

Da der Kühlluftstrom das gesamte Gehäuse der Doppelkupplung erreichen soll, liegt der Auslassbereich für die Kühlluft vorzugsweise an dem dem Einlassbereich gegenüberliegenden Ende des Kupplungsgehäuses.

Um zu gewährleisten, dass die Kühlluft eine ausreichend tiefe Temperatur aufweist, können die Einlass- und Auslassbereiche der Kühlluft über ein Leitungssystem mit dem Frontkühler des Fahrzeugs verbunden sein. Dadurch ist auch gewährleistet, dass die Kühlluft weitestgehend trocken ist, denn die angesaugte Luft darf keinesfalls Wasser enthalten.

Um die Kühlluft sauber zu halten, können in dem Kühlluftstrom im Einlass- und Auslassbereich des Kupplungsgehäuses Luftfilter angeordnet sein.

Die Erfindung ist in der Zeichnung beispielhaft veranschaulicht und im Nachstehenden im Einzelnen anhand der Zeichnung beschrieben. Es zeigen:
- Fig. 1:: einen Schnitt durch den oberen Teil eines ersten Ausführungsbeispiels einer Doppelkupplung,
- Fig. 2:: den gleichen Schnitt durch ein zweites Ausführungsbeispiel einer Doppelkupplung,
- Fig. 3:: den gleichen Schnitt durch ein drittes Ausführungsbeispiel einer Doppelkupplung,
- Fig. 4:: den gleichen Schnitt durch ein zweites Kupplungssystem in dem die Ausführungsbeispiele in den Figuren 1 bis 3 anwendbar sind,
- Fig. 5:: eine schematische Übersicht über eine Möglichkeit zur Führung des Kühlluftstroms,
- Fig. 6:: eine schematische Übersicht über eine zweite Möglichkeit zur Führung des Luftstroms und
- Fig. 7:: eine schematische Übersicht über eine dritte Möglichkeit zur Führung eines Luftstroms.

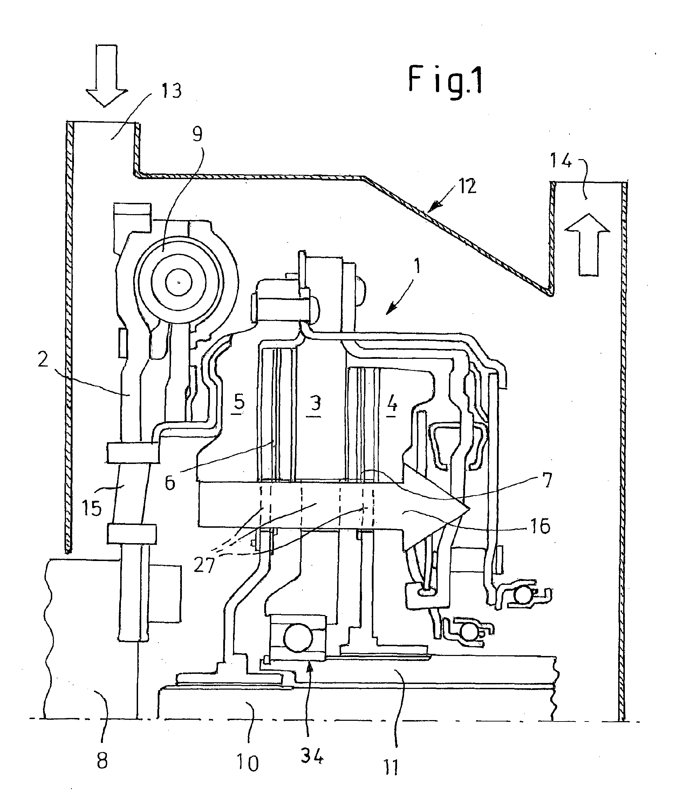

Nach Fig. 1 der Zeichnung besteht die Doppelkupplung 1 im Wesentlichen aus einer Antriebsscheibe 2, einer mit dieser verbundenen Zentralscheibe 3, beidseitig der Zentralscheibe 3 vorgesehenen Anpressplatten 4 und 5 sowie zwischen der Zentralscheibe 3 und den Anpressplatten 4 und 5 angeordneten Reibscheiben 6 bzw. 7.

Die Antriebsscheibe 2 sitzt drehfest auf der Eingangswelle 8 der Doppelkupplung 1 und rotiert folglich mit dieser mit der gleichen Drehzahl. Die Eingangswelle 8 ist normalerweise die Antriebswelle beziehungsweise Kurbelwelle eines in der Zeichnung nicht dargestellten Motors.

Die Antriebsscheibe 2 ist über einen Torsionsdämpfer 9 mit der Zentralscheibe 3 verbunden, d. h., dass die Zentralscheibe 3 mit der gleichen Drehzahl wie die Antriebsscheibe 2 umläuft. Die beidseitig der Zentralscheibe 3 angeordneten Anpressplatten 4 und 5 laufen mit der Zentralscheibe 3 um, sind jedoch axial zu der Zentralscheibe 3 verschiebbar. Hierbei ist die Zentralscheibe auf einem Hohlwellenlager 34 über eine Hohlwelle 11 radial geführt und axial abgestützt.

Zur Auslösung des Kupplungsvorgangs wird eine der Anpressplatten 4 beziehungsweise 5 in Richtung auf die Zentralscheibe 3 bewegt, wodurch die jeweilige Reibscheibe 6 beziehungsweise 7 fest an die Zentralscheibe 3 angedrückt wird.

Durch das Ankuppeln der jeweiligen Reibscheibe 6 beziehungsweise 7 rotiert diese mit der Zentralscheibe 3 und überträgt das Drehmoment des Motors auf die jeweilige Ausgangswelle 10 beziehungsweise 11 der Doppelkupplung 1.

Die Ausgangswelle 10, die mit der in der Zeichnung links dargestellten Reibscheibe 6 verbindbar ist, ist als Vollwelle ausgebildet und mündet in ein in der Zeichnung nicht dargestelltes Getriebegehäuse, wo sie zum Antrieb eines ersten Teilgetriebes dient. Dieses Teilgetriebe bedient beispielsweise die Gänge 1, 3 und 5.

Die Ausgangswelle 11, die mit der in der Zeichnung rechts dargestellten Reibscheibe 7 verbindbar ist, ist als Hohlwelle ausgebildet, die die Vollwelle 10 umgibt. Die Hohlwelle 11 führt ebenfalls in das in der Zeichnung nicht dargestellte Getriebegehäuse und dient zum Antrieb eines zweiten Teilgetriebes, welches beispielsweise für die Gänge 2, 4, 6 und R vorgesehen ist.

Die gesamte in der Zeichnung dargestellte Doppelkupplung 1 ist von einem Kupplungsgehäuse 12 umgeben.

Im Anfahrzustand, insbesondere auch im Stop-and-go-Betrieb, bei welchem die jeweilige Reibscheibe 6 beziehungsweise 7 zwischen der Zentralscheibe 3 und der jeweiligen Anpressplatte 4 beziehungsweise 5 schleift, entsteht eine erhebliche Reibungswärme, die abgeführt werden muss, denn andernfalls würde es sowohl zu einem starken Verschleiß der Reibscheiben 6 /6a und 7 als auch zu Geruchsbildung kommen.

Zur Kühlung der Doppelkupplung 1 ist das Kupplungsgehäuse 12 mit einem Lufteinlass 13 und einem Luftauslass 14 versehen. Der Lufteinlass 13 ist dabei im Bereich der Eingangsseite des Doppelgetriebes 1 und der Luftausgang 14 auf der Ausgangsseite des Doppelgetriebes 1 angeordnet.

Zur Erzeugung eines intensiven Luftstroms durch das Kupplungsgehäuse 12 ist ein Lüfterrad 15 vorgesehen, welches, wie in Fig. 1 dargestellt, in die Antriebsscheibe 2 integriert ist. Insofern rotiert das Lüfterrad 15 mit der Antriebsscheibe 2 und somit auch mit der Antriebswelle 8 des Motors.

Bei dieser Konstruktion wird der durch das Lüfterrad 15 erzeugte Kühlluftstrom 16 an die Drehzahl der Eingangswelle 8 angepasst, d.h., dass bei höherer Motordrehzahl, bei der auch die Reibscheiben 6 und 7 unter Umständen stärker wärmebelastet werden, auch der Luftstrom intensiviert wird.

Durch diese optimale aktive Luftkühlung der Doppelkupplung werden die Temperaturen des aus der Zentralscheibe 3, den Anpressplatten 4 und 5 sowie den Reibscheiben 6 und 7 bestehenden Kupplungssystems reduziert, wodurch nicht nur der Verschleiß der einzelnen Kupplungsteile verringert, sondern auch der Reibwert der Reibscheiben 6 und 7 stabilisiert wird. Durch die Stabilisierrung des Reibwertes der Scheiben ist es auch möglich, bei gleicher Anpresskraft der Anpressplatten 4 und 5 ein stabileres Drehmoment zu übertragen. Des Weiteren wird die Geruchsbildung signifikant reduziert.

Aufgrund der konstruktiven Anordnung des Lufteinlasses 13 und des Luftauslasses 14 an gegenüberliegenden Enden des Kupplungsgehäuses ist eine sehr intensive Luftzirkulation durch die gesamte Doppelkupplung 1 möglich. Aufgrund dieser äußerst aktiven Luftkühlung können unter Umständen auch die Volumina der Gussmassen der Zentralscheibe 3 sowie der Anpressplatten 4 und 5 reduziert werden, sodass auch insoweit Einsparungen möglich sind und die Kupplungsverluste reduziert werden, wodurch die entstehenden Verluste, die durch das Lüfterrad verursacht werden, kompensiert werden können.

Um den Kühlluftstrom 16 durch die Antriebsscheibe 2 in gleicher Höhe wie das Lüfterrad 15 transportieren zu können, sind Luftdurchtrittsöffnungen 27 vorgesehen, sodass die Kühlluft aus dem mit dem Lufteinlass 13 verbundenen Bereich vor der Antriebsscheibe 2 angesaugt und durch die gesamte Kupplung zum Luftaustritt 14 geleitet werden kann.

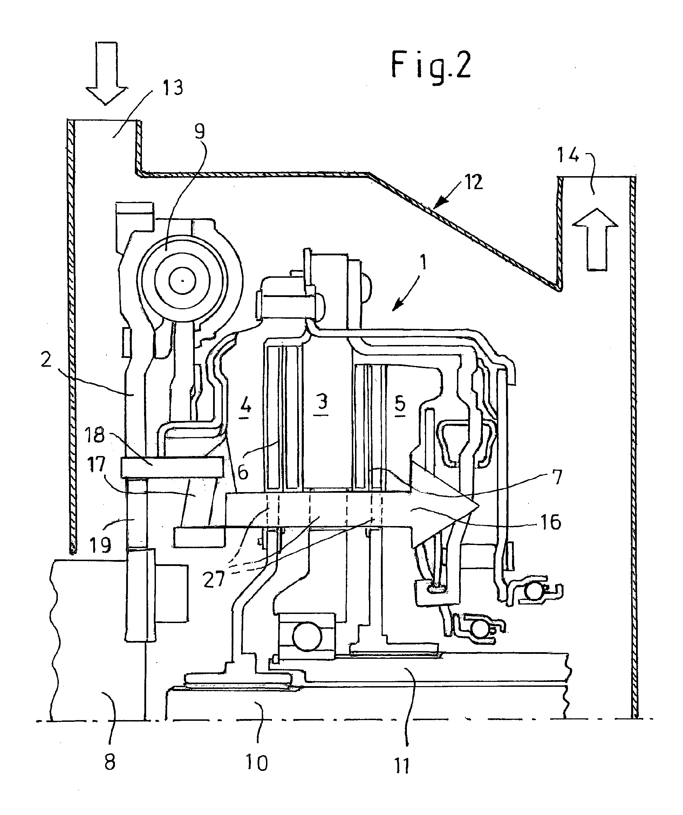

Bei dem in Fig. 2 dargestellten zweiten Ausführungsbeispiel der Doppelkupplung 1 werden für übereinstimmende Teile die gleichen Positionszahlen verwendet wie bei dem in Fig. 1 dargestellten ersten Ausführungsbeispiel.

Auch bei diesem zweiten Ausführungsbeispiel besteht die Doppelkupplung wiederum aus der Zentralscheibe 3, den Anpressplatten 4 und 5 sowie den Reibscheiben 6 und 7, die im gekuppelten Zustand das Drehmoment des Motors auf die jeweilige Ausgangswelle 10 beziehungsweise 11 übertragen.

Ebenso wie bei dem in Fig. 1 dargestellten Ausführungsbeispiel sitzt die mit der Zentralscheibe 3 über einen Torsionsdämpfer 9 verbundene Antriebsscheibe 2 auf der von dem Antriebsmotor ausgehenden, in das Kupplungsgehäuse mündenden Eingangswelle 8.

In ähnlicher Weise wie bei dem in Fig. 1 dargestellten Ausführungsbeispiel ist ein Lüfterrad 17 vorgesehen, welches mit der Antriebsscheibe 2 rotiert. Das Lüfterrad 17 ist in diesem Fall als gesondertes Bauteil ausgebildet und ist zwischen der Antriebsscheibe 2 und dem Kupplungsbereich angeordnet. Das Lüfterrad 17 liegt also in Strömungsrichtung des Kühlluftstroms 16 hinter der Antriebsscheibe 2. Über eine Halterung 18 ist das Lüfterrad 17 im Wesentlichen starr mit der Antriebsscheibe 2 verbunden, sodass es mit der gleichen Drehzahl wie die Antriebsscheibe 2 beziehungsweise die Motorwelle 8 rotiert.

Um den Kühlluftstrom 16 durch die Antriebsscheibe 2 hindurchzuführen, sind in der Antriebsscheibe 2 und in der Zentralscheibe 3 in gleicher Höhe wie das Lüfterrad 17 Luftdurchtrittsöffnungen 19 und 27 vorgesehen, durch die das Lüfterrad 17 Kühlluft aus dem mit dem Lufteinlass 13 verbundenen Bereich vor der Antriebsscheibe 2 ansaugt und durch die gesamte Kupplung zum Luftaustritt 14 leitet. Für dieses zweite Ausführungsbeispiel der Doppelkupplung 1 gelten die gleichen Vorteile wie für das Ausführungsbeispiel gemäß Fig. 1.

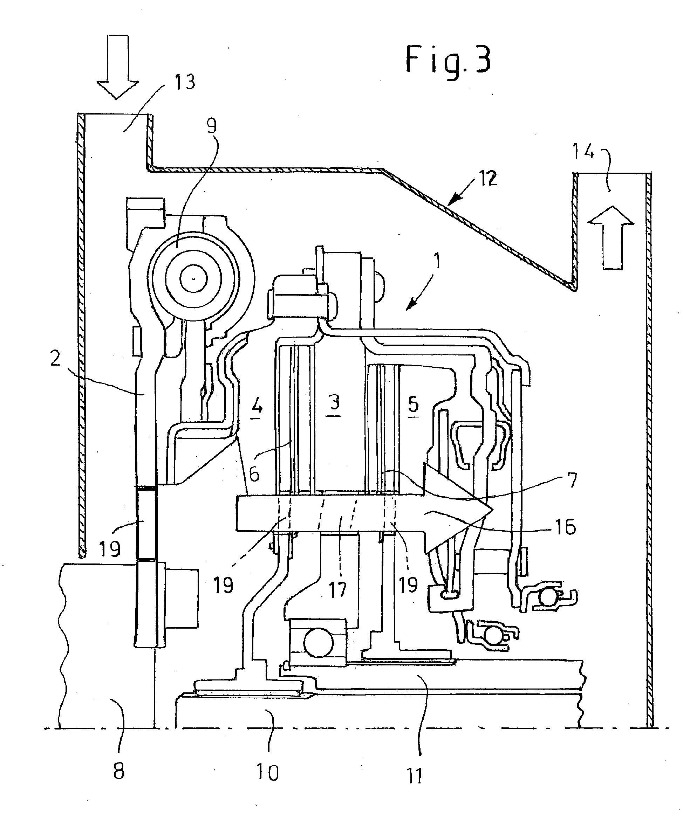

Bei dem in Fig. 3 dargestellten dritten Ausführungsbeispiel der Doppelkupplung 1 werden für übereinstimmende Teile die gleichen Positionszahlen verwendet wie bei dem in Fig. 1 dargestellten ersten Ausführungsbeispiel.

Auch bei diesem dritten Ausführungsbeispiel besteht die Doppelkupplung wiederum aus der Zentralscheibe 3, den Anpressplatten 4 und 5 sowie den Reibscheiben 6 und 7, die im gekuppelten Zustand das Drehmoment des Motors auf die jeweilige Ausgangswelle 10 beziehungsweise 11 übertragen.

Ebenso wie bei den in den Figuren 1 und 2 dargestellten Ausführungsbeispielen sitzt die mit der Zentralscheibe 3 über einen Torsionsdämpfer 9 verbundene Antriebsscheibe 2 auf der von dem Antriebsmotor ausgehenden, in das Kupplungsgehäuse mündenden Eingangswelle 8.

In ähnlicher Weise wie bei dem in Fig. 2 dargestellten Ausführungsbeispiel ist ein Lüfterrad 17 vorgesehen, welches mit der Zentralscheibe 3 rotiert. Das Lüfterrad 17 ist in diesem Fall als gesondertes Bauteil ausgebildet und ist zwischen der Antriebsscheibe 2 und dem Kupplungsbereich angeordnet. Das Lüfterrad 17 liegt also in Strömungsrichtung des Kühlluftstroms 16 hinter der Antriebsscheibe 2. Die Zentralscheibe 3 ist mit dem Dämpfer verbunden, sodass es mit der gleichen Drehzahl wie die Antriebsscheibe 2 beziehungsweise die Motorwelle 8 rotiert.

Um den Kühlluftstrom 16 durch die Zentralscheibe 3 hindurchzuführen, sind in der Antriebsscheibe 2 und in der Zentralscheibe 3 in gleicher Höhe wie das Lüfterrad 17 Luftdurchtrittsöffnungen 19 vorgesehen, durch die das Lüfterrad 17 Kühlluft aus dem mit dem Lufteinlass 13 verbundenen Bereich vor der Antriebsscheibe 2 ansaugt und durch die gesamte Kupplung zum Luftaustritt 14 leitet. Für dieses zweite Ausführungsbeispiel der Doppelkupplung 1 gelten die gleichen Vorteile wie für das Ausführungsbeispiel gemäß den Figuren 1 und 2.

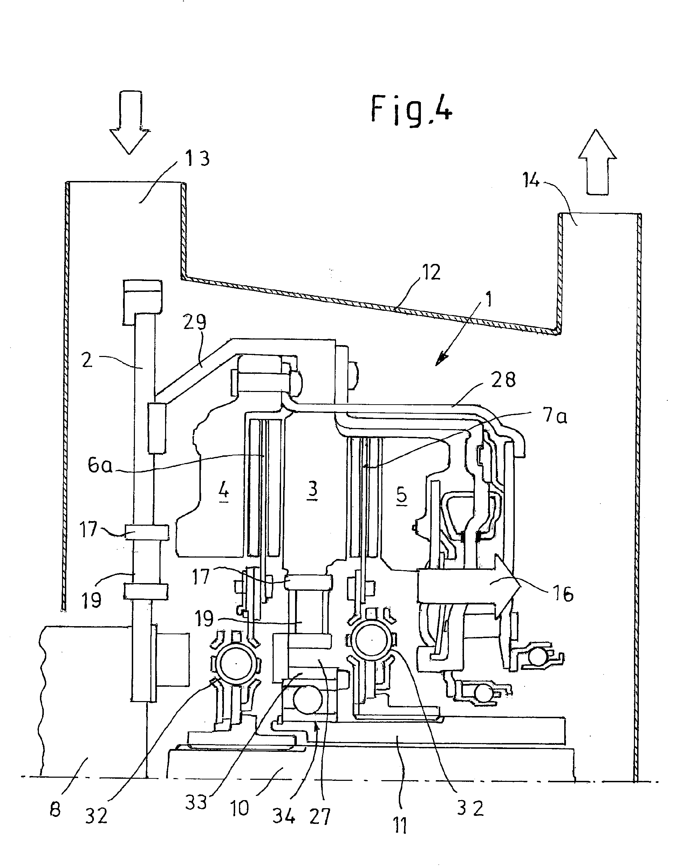

Nach Fig. 4 der Zeichnung besteht die Doppelkupplung 28 im Wesentlichen aus einer Antriebsscheibe 2, einer mit dieser über einen Zwischenkörper 29 verbundenen Zentralscheibe 3, beidseitig der Zentralscheibe 3 vorgesehenen Anpressplatten 4 und 5 sowie zwischen der Zentralscheibe 3 und den Anpressplatten 4 und 5 angeordneten Reibscheiben 6a bzw. 7a.

Die Antriebsscheibe 2 sitzt drehfest auf der Eingangswelle 8 der Doppelkupplung 28 und rotiert folglich mit dieser mit der gleichen Drehzahl. Die Eingangswelle 8 ist normalerweise die Antriebswelle beziehungsweise Kurbelwelle eines in der Zeichnung nicht dargestellten Motors.

Die Antriebsscheibe 2 ist über einen Zwischenkörper 29 mit der Zentralscheibe 3 verbunden, d. h., dass die Zentralscheibe 3 mit der gleichen Drehzahl wie die Antriebsscheibe 2 umläuft. Die beidseitig der Zentralscheibe 3 angeordneten Anpressplatten 4 und 5 laufen mit der Zentralscheibe 3 um, sind jedoch axial zu der Zentralscheibe 3 verschiebbar. Hierbei ist die Zentralscheibe 3 über den Zwischenkörper 29 mit der Verbindung an die Antriebsscheibe 2 radial geführt. Die axiale Abstützung wird über dass Hohlwellenlager 34 verbunden mit einer zusätzlichen Anlaufscheibe 33 bewerkstelligt.

Zur Auslösung des Kupplungsvorgangs wird eine der Anpressplatten 4 beziehungsweise 5 in Richtung auf die Zentralscheibe 3 bewegt, wodurch die jeweilige Reibscheibe 6a beziehungsweise 7a fest an die Zentralscheibe 3 angedrückt wird.

Durch das Ankuppeln der jeweiligen Reibscheibe 6 beziehungsweise 7 rotiert diese mit der Zentralscheibe 3 und überträgt das Drehmoment des Motors auf die jeweilige Ausgangswelle 10 beziehungsweise 11 der Doppelkupplung 28.

Die Ausgangswelle 10, die mit der in der Zeichnung links dargestellten Reibscheibe 6 verbindbar ist, ist als Vollwelle ausgebildet und mündet in ein in der Zeichnung nicht dargestelltes Getriebegehäuse, wo sie zum Antrieb eines ersten Teilgetriebes dient. Dieses Teilgetriebe bedient beispielsweise die Gänge 1, 3 und 5.

Die Ausgangswelle 11, die mit der in der Zeichnung rechts dargestellten Reibscheibe 7 verbindbar ist, ist als Hohlwelle ausgebildet, die die Vollwelle 10 umgibt. Die Hohlwelle 11 führt ebenfalls in das in der Zeichnung nicht dargestellte Getriebegehäuse und dient zum Antrieb eines zweiten Teilgetriebes, welches beispielsweise für die Gänge 2, 4, 6 und R vorgesehen ist.

Die gesamte in der Zeichnung dargestellte Doppelkupplung 28 ist von einem Kupplungsgehäuse 12 umgeben.

Im Anfahrzustand, insbesondere auch im Stop-and-go-Betrieb, bei welchem die jeweilige Reibscheibe 6a beziehungsweise 7a zwischen der Zentralscheibe 3 und der jeweiligen Anpressplatte 4 beziehungsweise 5 schleift, entsteht eine erhebliche Reibungswärme, die abgeführt werden muss, denn andernfalls würde es sowohl zu einem starken Verschleiß der Reibscheiben 6a und 7a als auch zu Geruchsbildung kommen.

Zur Kühlung der Doppelkupplungen 1 und 28 ist das Kupplungsgehäuse 12 mit einem Lufteinlass 13 und einem Luftauslass 14 versehen. Der Lufteinlass 13 ist dabei im Bereich der Eingangsseite der Doppelgetriebe 1 und 28 und der Luftausgang 14 auf der Ausgangsseite der Doppelgetriebe 1 und 28 angeordnet.

Zur Erzeugung eines intensiven Luftstroms durch das Kupplungsgehäuse 12 ist ein Lüfterrad 17 vorgesehen, welches, wie in Fig. 1 dargestellt, wahlweise in die Antriebsscheibe 2 oder in die Zentralscheibe 3 integriert ist. Insofern rotiert das Lüfterrad 17 mit der Antriebsscheibe 2 und somit auch mit der Antriebswelle 8 des Motors, äquivalent zu den in den Figuren 1 und 2 gezeigten Ausführungen.

Bei dieser Konstruktion wird der durch das Lüfterrad 17 erzeugte Kühlluftstrom 16 an die Drehzahl der Eingangswelle 8 angepasst, d.h., dass bei höherer Motordrehzahl, bei der auch die Reibscheiben 6/6a und 7/7a unter Umständen stärker wärmebelastet werden, auch der Luftstrom intensiviert wird. Die Reibscheiben 6a and 7a können wahlweise mit einem Dämpfersystem 32 ausgeführt sein.

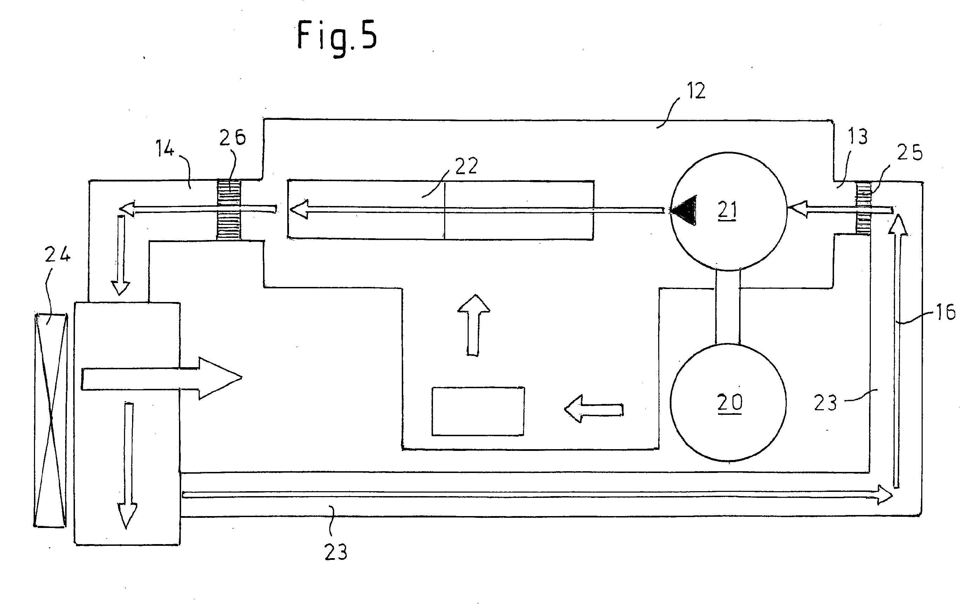

In Fig. 5 ist in schematischer Darstellung ein Ausführungsbeispiel für eine Möglichkeit zur Führung des Kühlluftstroms gezeigt. Die einzelnen Bauteile sind nur schematisch dargestellt.

Ein als Kreis dargestelltes Lüfterrad 21 wird von einem ebenfalls als Kreis dargestellten Motor 20 angetrieben. Dieses Lüfterrad 21 ist einer Doppelkupplung 22 vorgeschaltet. Der Kühlluftstrom 16 wird durch ein Leitungssystem 23 geführt, welches vom Frontkühler 24 ausgeht und durch einen im Lufteinlass des Kupplungsgehäuses 12 angeordneten Einlassfilter 25 in das Kupplungsgehäuse 12 eingeleitet wird.

Das vom Motor 20 angetriebene Lüfterrad 21 bläst die Kühlluft durch beide Teilkupplungen der Doppelkupplung 22 hindurch. Der darin erwärmte Kühlluftstrom gelangt dann durch den Luftauslass 14 sowie einen in dem Luftauslass 14 angeordneten Auslassfilter 26 zurück zum Frontkühler 24.

Durch diese Art der Luftführung ist gewährleistet, dass die Kühlluft frei von Wasser ist. Weiterhin wird sichergestellt, dass aufgrund der Filter 25 und 26, die in dem Lufteinlass 13 bzw. dem Luftauslass 14 des Kupplungsgehäuses 12 angeordnet sind, die durch die Kupplungsteile strömende Kühlluft sauber bleibt.

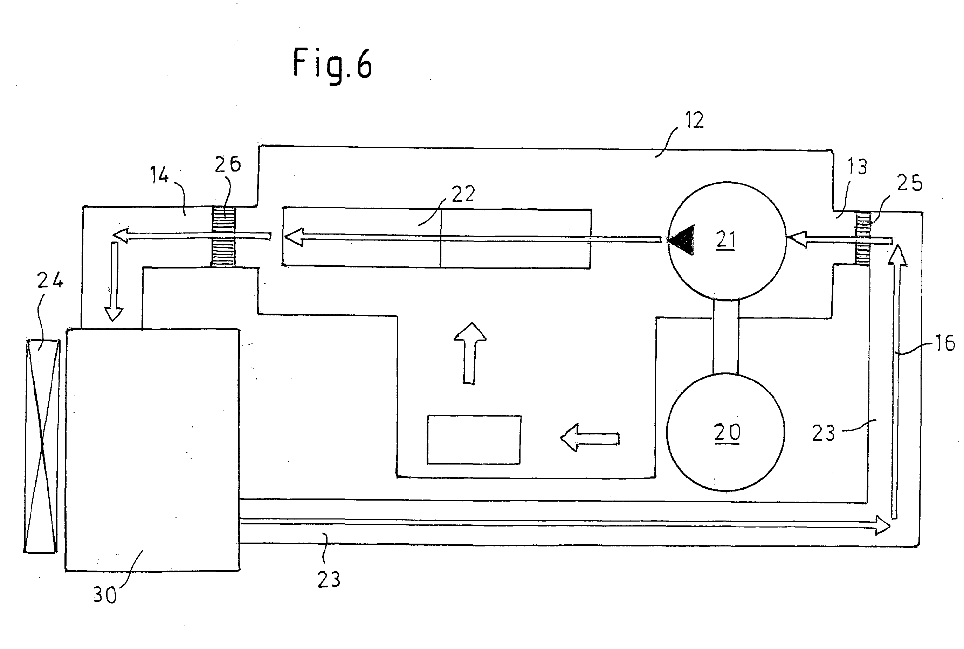

Fig. 6 zeigt den gleichen Kühlstromkreislauf wie in Fig. 5, nur ohne Hauptkühler. In dieser Version wird am vorderen Fahrzeugende 30 die Kupplungswärme mit der Umgebung ausgetauscht.

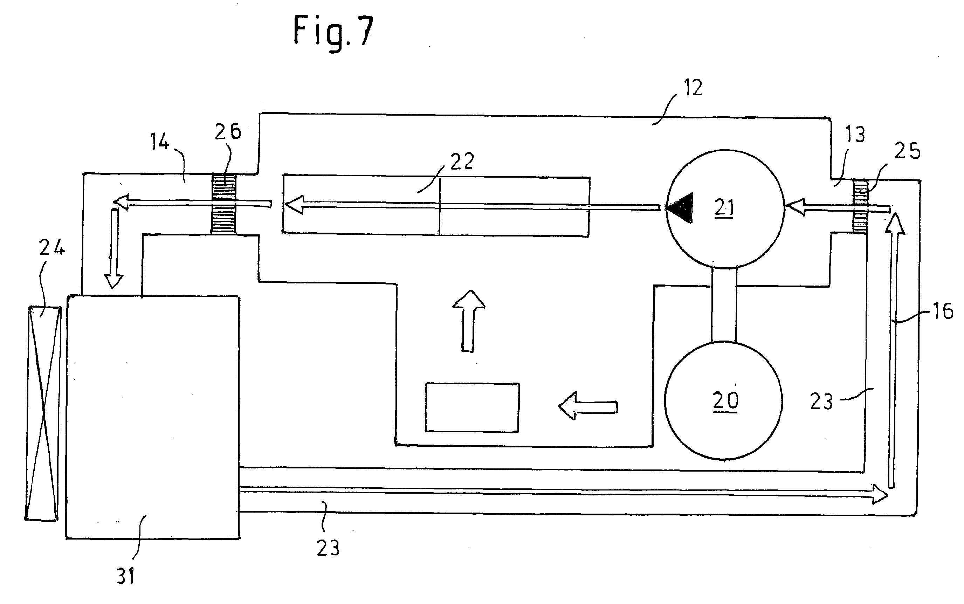

Fig. 7 zeigt den gleichen Kühlstromkreislauf wie in Fig. 6 ohne Kühler, wobei der Wärmeaustausch im Motorbereich 31 stattfindet.

Durch die Erfindung wird somit ein optimales aktives Kühlsystem für eine trockene Doppelkupplung geschaffen, sodass deren Leistungsfähigkeit erhöht, der Verschleiß verringert und eventuell sogar die Gussmassen verschiedener Kupplungsscheiben reduziert werden können und damit auch die Geruchsbildung reduziert wird.

### BEZUGSZEICHENLISTE

- 1: Doppelkupplung / System 1
- 2: Antriebsscheibe
- 3: Zentralscheibe
- 4: Anpressplatte
- 5: Anpressplatte
- 6: Reibscheibe
- 6a: Reibscheibe - mit Dämpfer
- 7: Reibscheibe
- 7a: Reibscheibe mit Dämpfer
- 8: Eingangswelle
- 9: Torsionsdämpfer
- 10: Ausgangswelle (Vollwelle)
- 11: Ausgangswelle (Hohlwelle)
- 12: Kupplungsgehäuse
- 13: Lufteinlass
- 14: Luftauslass
- 15: Lüfterrad
- 16: Kühlluftstrom
- 17: Lüfterrad
- 18: Halterung
- 19: Luftdurchtrittsöffnung
- 20: Motor
- 21: Lüfterrad
- 22: Doppelkupplung
- 23: Leitungssystem
- 24: Frontkühler
- 25: Einlassfilter
- 26: Auslassfilter
- 27: Luftdurchtrittsöffnungen
- 28: Doppelkupplung / System 2
- 29: Zwischenkörper Doppelkupplung
- 30: Fahrzeug vorderer Bereich - kein Kühler
- 31: Motorbereich - kein Kühler
- 32: Dämpfer
- 33: Anlaufscheibe
- 34: Hohlwellenlager

## Patentansprüche

1. Doppelkupplungsgetriebe für Kraftfahrzeuge mit zwei Teilgetrieben, einer trockenen Doppelkupplung (1; 28), die das Drehmoment vom Motor wahlweise auf eines der beiden Teilgetriebe überträgt, sowie einem Kühlsystem mit einem Lüfterrad (15; 17) zur aktiven Luftkühlung der Doppelkupplung (1), **dadurch gekennzeichnet, dass** das Lüfterrad (15; 17) mit der vom Motor kommenden Eingangswelle (8) der Doppelkupplung (1) rotiert und dass der durch das Lüfterrad (15; 17) erzeugte Kühlluftstrom (16) durch das gesamte Gehäuse (12) der Doppelkupplung (1) hindurchführbar ist.

2. Doppelkupplungsgetriebe nach Anspruch 1, **dadurch gekennzeichnet, dass** das Lüfterrad (15; 17) mit derselben Drehzahl wie die vom Motor kommende Eingangswelle (8) der Doppelkupplung (1) rotiert.

3. Doppelkupplungsgetriebe nach Anspruch 2, **dadurch gekennzeichnet, dass** das Lüfterrad (15; 17) mit der auf der Eingangswelle (8) sitzenden Antriebsscheibe (2) der Doppelkupplung (1;28) rotiert.

4. Doppelkupplungsgetriebe nach Anspruch 3, **dadurch gekennzeichnet, dass** das Lüfterrad (17) an der Antriebsscheibe (2) der Doppelkupplung (1) angebracht ist.

5. Doppelkupplungsgetriebe nach Anspruch 3, **dadurch gekennzeichnet, dass** das Lüfterrad (15) in die Antriebsscheibe (2) integriert ist.

6. Doppelkupplungsgetriebe nach Anspruch 3, **dadurch gekennzeichnet, dass** das Lüfterrad (15, 17) wahlweise in der Zentralscheibe (3) angebracht oder integriert ist.

7. Doppelkupplungsgetriebe nach einem der Ansprüche 1 bis 6, **dadurch gekennzeichnet, dass** die Antriebsscheibe (2) Durchlassöffnungen (19) und gegebenenfalls Durchlassöffnungen (27) für die Kühlluft aufweist.

8. Doppelkupplungsgetriebe nach einem der Ansprüche 1 bis 7, **dadurch gekennzeichnet, dass** der Einlassbereich der Kühlluft in das Kupplungsgehäuse (12) in Strömungsrichtung vor dem Lüfterrad (15;17) liegt.

9. Doppelkupplungsgetriebe nach einem der Ansprüche 1 bis 8, **dadurch gekennzeichnet, dass** der Auslassbereich für die Kühlluft an den dem Einlassbereich gegenüberliegenden Ende des Kupplungsgehäuses (12) liegt.

10. Doppelkupplungsgetriebe nach einem der Ansprüche 1 bis 9, **dadurch gekennzeichnet, dass** die Einlass- und Auslassbereiche der Kühlluft über ein Leitungssystem (23) mit dem Frontkühler (24) des Fahrzeugs verbunden sind.

11. Doppelkupplungsgetriebe nach einem der Ansprüche 1 bis 10, **dadurch gekennzeichnet, dass** die Einlass- und Auslassbereiche der Kühlluft mit der Fahrzeugumgebung (30) nach außen verbunden sind.

12. Doppelkupplungsgetriebe nach einem der Ansprüche 1 bis 11, **dadurch gekennzeichnet, dass** die Einlass- und Auslassbereiche der Kühlluft im Motorraum (31) liegen.

13. Doppelkupplungsgetriebe nach einem der Ansprüche 1 bis 12, **dadurch gekennzeichnet, dass** in den Kühlluftstrom (16) im Einlass- und Auslassbereich des Kupplungsgehäuses (12) Luftfilter (25; 26) angeordnet sind.
